# DEMANDE DE BREVET EUROPEEN

(11) **EP 1 491 323 A1**
(43) Date de publication de la demande: **29.12.2004**
(21) Numéro de dépôt: 04356110.9
(22) Date de dépôt: 24.06.2004
(51) Int. Cl.: B29C 70/08, B29C 70/22, B29C 70/00

(54) **Nouveau complexe de renforcement avec fils raidisseurs**

(30) Priorité: 24.06.2003 FR 0307606
(71) Demandeur: CHOMARAT COMPOSITES, 75002 Paris (FR)
(72) Inventeur: Fabre, Jean-Erik, 07160 Mariac (FR); Baudonnel, Jacques, 07160 Le Cheylard (FR)
(74) Mandataire: Sarlin, Laure V.

(57) **Abrégé**

L'invention a pour objet un complexe de renforcement **(1)** unidirectionnel, pour la réalisation de pièces composites à base de résine thermodurcissable ou thermoplastique injectée, dans lequel la fonction de renforcement est assurée par une série de fils de renfort **(3)** parallèles entre eux et organisés en une ou deux nappes **(2)** de façon à ce que le complexe de renforcement présente une couverture sensiblement de 100 %, caractérisé en ce que : des fils raidisseurs **(3**_{**1**}**)** parallèles entre eux et aux fils de renfort **(3)** sont répartis, de façon espacée, au sein de la ou des nappes **(2)** de fils de renfort **(3),** et la liaison entre les fils **(3, 3**_{**1**}**)** constitutifs du complexe de renforcement **(1)**, est assurée par une nappe ajourée transversale **(4)** de fils de liage **(5)** composés d'une âme fibreuse enrobée d'une matière thermoplastique et s'étendant transversalement aux fils de renfort **(3)** et aux fils raidisseurs **(3**_{**1**}**)** en étant croisés avec ces derniers sans entrelacement, lesdits fils de renfort **(3)** et fils raidisseurs **(3**_{**1**}**)** étant liés, à leur intersection avec les fils de liage **(5)** de la nappe transversale **(4)**, par la matière thermoplastique.

## Description

La présente invention est relative au domaine des produits de renforcement unidirectionnels à caractère cohérent, qui sont plus particulièrement destinés à constituer des armatures.

Dans de nombreux domaines, il est souhaitable de pouvoir renforcer un produit fabriqué de manière à accroître certaines caractéristiques mécaniques conférées par la matière constitutive mise en oeuvre pour la réalisation du dit produit. Il est ainsi connu d'utiliser des armatures de renforcement en relation avec le ciment, le béton, les matières plastiques et les résines.

Dans les domaines ci-dessus, une armature de renforcement est constituée, généralement à partir d'un réseau maillé qui est confectionné ou produit à partir de fibres qui peuvent être unidirectionnelles pour certaines applications ou tissées en laizes de plus ou moins grande largeur.

Une telle armature de renforcement est, par exemple, constituée d'un complexe de renfort unidirectionnel composé à partir de nappes de fibres ou fils de verre ou de carbone ou d'aramide qui sont liées par des coutures en lignes ou en zigzag au moyen d'un fil en polyester. Un tel produit présente un certain nombre d'inconvénients parmi lesquels il faut citer un état de surface marqué dû à la présence de coutures créant des surépaisseurs ou des zones de résistance moindre. Un tel état de surface est, dans certains cas, incompatible avec l'application visée. De plus, la couture vient serrer les fils de renfort diminuant ainsi l'accessibilité de ces fils pour la résine qui sera ultérieurement injectée lors de la fabrication de pièces composites.

Parmi les inconvénients, il convient aussi de citer le coût de production d'un tel produit, étant donné que les machines à mettre en oeuvre doivent posséder des têtes multi-aiguilles pour l'établissement des coutures en ligne ou en zigzag, chaque aiguille devant nécessairement être alimentée avec un fil propre. La mise en service d'une telle machine demande donc un travail préparatoire important qui vient grever le prix de production du produit.

Un autre inconvénient tient aussi à la présence de fils de couture en matière différente de celle des fibres de verre ou de carbone ou d'aramide constitutifs des nappes. Ces fils de couture empêchent les fils de renforts d'être parfaitement droits, ce qui altère les caractéristiques mécaniques (dont le module à l'origine) de la pièce composite finie.

En outre, un autre inconvénient des complexes de renforcement de l'art antérieur est que, lors de la fabrication d'une pièce composite ultérieure, la résine est souvent injectée à une telle pression qu'il existe des risques de chasser les fils de renfort dans les zones inter-coutures. Il en résulte des déviations de la nappe de fils de renfort, ce qui peut provoquer un affaiblissement de la fonction de renfort, ou encore, la présence de plis qui entraînent une fragilisation de la pièce composite obtenue.

Dans ce contexte, l'objet de l'invention est de remédier à ces inconvénients en proposant un nouveau complexe de renforcement unidirectionnel à caractère cohérent et semi-rigide et se présentant sous une forme plane qui soit obtenu selon un procédé simplifié. Par complexe de renforcement unidirectionnel, on entend un complexe fibreux dans lequel les fils assurant la fonction de renforcement du complexe sont tous tendus et orientés dans la même direction et sont donc tous sensiblement parallèles entre eux. Ces fils peuvent être répartis en une ou deux nappes. Par caractère cohérent, il convient de considérer que le produit selon l'invention est réalisé de manière à présenter une tenue propre et à être capable de résister à certaines contraintes de manipulation, voire de mise en oeuvre pour l'obtention d'un produit semi-fini ultérieur.

Pour atteindre les objectifs ci-dessus, le complexe de renforcement unidirectionnel selon l'invention, dans lequel la fonction de renforcement est assurée par une série de fils de renfort parallèles entre eux et organisés en une ou deux nappes de façon à ce que le complexe de renforcement présente une couverture sensiblement de 100 %, est caractérisé en ce que :
■ des fils raidisseurs parallèles entre eux et aux fils de renfort sont répartis, de façon espacée, au sein de la ou des nappes de fils de renfort,
■ et la liaison des fils constitutifs du complexe de renforcement est assurée par une nappe ajourée transversale de fils de liage composés d'une âme fibreuse enrobée d'une matière thermoplastique et s'étendant transversalement aux fils de renfort et aux fils raidisseurs, en étant croisés avec ces derniers sans entrelacement, lesdits fils de renfort et fils raidisseurs étant liés, à leur intersection avec les fils de liage de la nappe transversale, par la matière thermoplastique.

La liaison du complexe selon l'invention est principalement réalisée à partir de fils enrobés, déjà disponibles sur le commerce, supprimant ainsi des étapes lourdes de réalisation et permettant d'obtenir un état de surface satisfaisant.

Par ailleurs, la présence de fils raidisseurs renforce la tenue du complexe et minimise les risques de chasser les fils de renfort dans les zones présentes entre les fils de liage. Ces fils raidisseurs sont parallèles à la direction de renforcement du complexe selon l'invention, donnée par l'orientation des fils de renfort, cette direction correspondant, également, à la direction préférentielle d'injection de la résine.

La présente invention a également pour objet un procédé de fabrication d'un complexe de renforcement unidirectionnel selon l'invention qui comprend les étapes suivantes :
■ constituer une première nappe non ajourée de fils de renfort parallèles entre eux dans laquelle des fils raidisseurs, ou des fils précurseurs de tels fils raidisseurs, parallèles entre eux et aux fils de renfort, sont répartis, superposer, sur cette première nappe, une nappe transversale de fils de liage espacés et composés d'une âme fibreuse enrobée d'une matière thermoplastique s'étendant transversalement aux fils de renfort et aux fils raidisseurs de la première nappe en étant croisés sans entrelacement,
■ et lier lesdites nappes par chauffage entraînant la fusion au moins partielle de la matière thermoplastique des fils de liage, compression et refroidissement.

Selon un autre de ses aspects, la présente invention concerne l'utilisation d'un complexe de renforcement, tel que défini ci-dessus, pour la fabrication de skis, de pales d'éoliennes ou d'éléments pultrudés, un tel complexe étant particulièrement adapté à la fabrication de pales d'éoliennes.

Diverses autres caractéristiques ressortent de la description faite ci-dessous en référence aux dessins annexés qui montrent, sous forme schématique et à titre d'exemples non limitatifs, des formes de réalisation de l'objet de l'invention.
La **fig. 1** est une perspective partielle d'un complexe de renforcement conforme à l'invention.
La **fig. 2** est une coupe partielle prise, volontairement à plus grande échelle, sensiblement selon le plan **I-I** de la **fig. 1.**
La **fig. 3** est une coupe partielle prise volontairement à plus grande échelle, sensiblement selon le plan **II-II** de la **fig. 1.**
La **fig. 4** est une coupe, analogue à la **fig. 2,** mais illustrant une autre variante de réalisation.
La **fig. 5** est une coupe, analogue à la **fig. 3,** de la variante de réalisation selon la **fig. 4.**
La **fig. 6** est une coupe, analogue à la **fig. 2,** mais illustrant une autre variante de réalisation.
La **fig. 7** est une coupe, analogue à la **fig. 2,** mais illustrant une autre variante de réalisation.

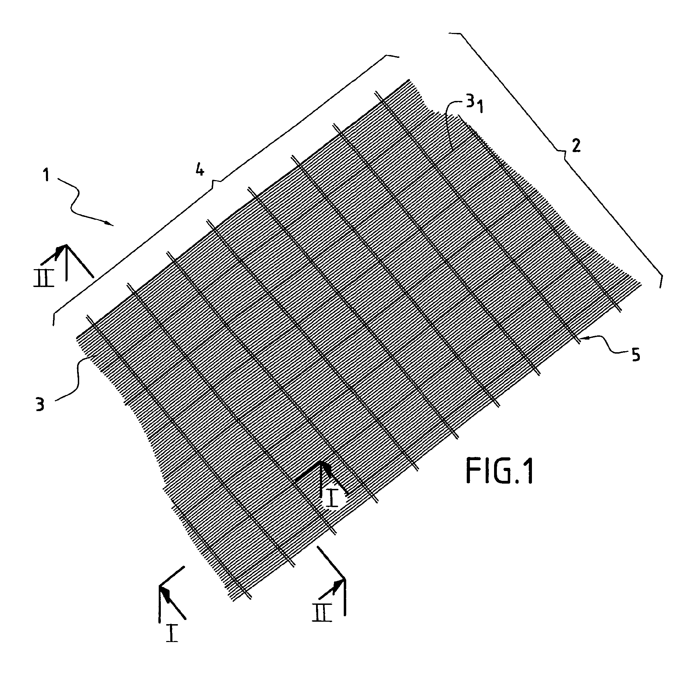

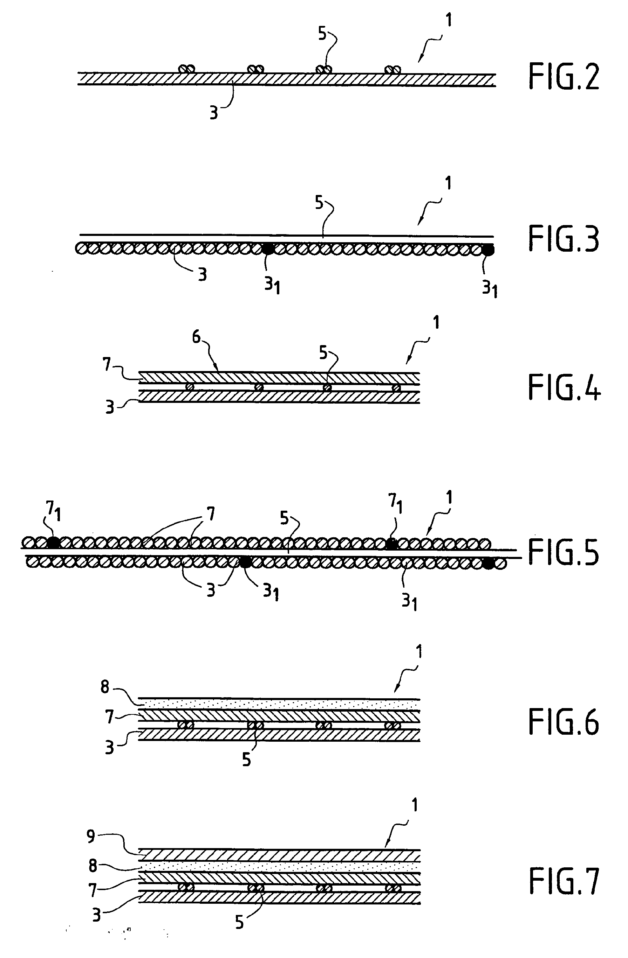

La **fig. 1** montre que le complexe de renforcement selon l'invention, désigné dans son ensemble par la référence **1**, comporte au moins une première nappe **2** de fils de renfort **3**, appelés par convention fils de chaîne par analogie avec les procédés par tissage, et qui s'étendent parallèlement entre eux. Comme le montre la **fig. 1,** ces fils de renfort 3 sont jointifs, afin d'obtenir un complexe de renforcement sensiblement non ajouré, c'est à dire que le complexe de renforcement présente une couverture sensiblement égale à 100 %. La liaison entre les fils de renfort de la première nappe est, principalement, assurée par une nappe transversale **4** de fils de liage **5** composés d'une âme fibreuse enrobée d'une matière thermoplastique, appelés par convention fils de trame, qui s'étendent aussi parallèlement entre eux et qui sont croisés sans entrelacement avec les fils de renfort **3** de la première nappe **2**. Dans les exemples illustrés aux **fig. 1** et **2,** les fils de liage **5** enrobés s'étendent selon une direction générale qui est orthogonale à celle des fils de renfort **3**. Il doit, cependant, être considéré qu'une orientation oblique pourrait aussi être retenue. Les fils de liage **5** enrobés comportent une âme à base d'une matière similaire ou non à celle des fils de renfort **3**, qui est enrobée d'une couche de matière thermoplastique. Cette nappe transversale **4** de fils de liage **5** est beaucoup moins dense que la première nappe **2** de fils de renfort **3** et forme, en fait, un réseau parallèle ajouré. Dans la nappe transversale **4**, les fils de liage sont espacés les uns des autres. Il peut également être envisagé que les fils de liage **5** enrobés soient répartis par groupes de deux, trois ou quatre fils, ces groupes étant alors espacés. L'espacement est, de préférence, régulier. L'espacement existant entre chaque fil de liage ou groupe de fils de liage est réalisé selon un pas d'espacement avantageusement compris entre 1 et 10 cm.

Par opposition aux fils de liage **5** enrobés de la nappe transversale **4,** les fils de renfort **3** de la première nappe sont non-enrobés. Les fils de liage **5** enrobés de la nappe transversale assure la cohésion du complexe de renforcement **1** selon l'invention, alors que les fils de renfort **3** de la première nappe assurent la fonction de renfort et ce, de façon unidirectionnelle. Dans le cas du complexe unidirectionnel selon l'invention, on peut considérer que 100 % des fils, assurant la fonction de renfort, sont orientés dans la même direction, à savoir la direction du renforcement. Comme illustré aux **fig. 1, 2 et 3**, les fils de renfort **3** de la première nappe **2** sont beaucoup plus nombreux que les fils de liage **5** enrobés de la nappe transversale **4** et de dimension (titrage) supérieure, c'est pourquoi le complexe selon l'invention est qualifié de complexe de renfort unidirectionnel, les fils de renfort **3** de la première nappe **2** donnant la direction de renforcement.

Les nappes **2** et **4** sont associées pour posséder une tenue relative conférant un caractère cohérent au complexe de renforcement 1. L'interliaison entre les fils de renfort **3** de la première nappe **2** et les fils de liage **5** enrobés de la nappe transversale **4** est assurée par fusion ou ramollissement, de la matière thermoplastique enrobant les fils de liage **5**, suivi de son retour à l'état solide. La liaison entre les fils de renfort **3** de la première nappe **2** et les fils de liage **5** enrobés de la nappe transversale **4** se fait à leur intersection et ce grâce à la matière thermoplastique servant d'enrobage aux fils de liage **5**. L'enrobage des fils de liage **5** doit être suffisant pour permettre la liaison de la totalité des fils de renfort **3** de la première nappe 2 entre eux et avec la nappe transversale **4**. A titre d'exemple, on pourra utiliser des fils de liage **5** présentant entre 10 et 500 g de matière thermoplastique pour 1 000 mètres linéaires et à raison, par exemple, de un fil de liage tous les centimètres.

Pour renforcer la tenue et la cohésion, du complexe de renforcement selon l'invention, des fils raidisseurs **3**_{**1**} sont présents au sein de la nappe **2** de fils de renfort **3.** Les fils raidisseurs **3**_{**1**} sont parallèles entre eux et parallèles aux fils de renfort **3.**

Les fils raidisseurs **3**_{**1**} ont pour fonction d'une part de renforcer la tenue du complexe fibreux pour éviter que, lors de l'injection ultérieure d'une résine, les fils de renfort **3** ne s'écartent pas trop les uns des autres, dans les zones situées entre les fils de liage **5** et d'autre part de garder les fils de renfort **3** parfaitement tendus garantissant ainsi au composite obtenu ultérieurement un module et des performances maximales.

Par fils raidisseurs, on entend, en particulier, des fils qui présentent une raideur comprise entre 1 et 5 mg, de préférence entre 2,5 et 4,5 mg. Cette raideur est mesurée avec un appareil de mesure de la rigidité (en anglais « Bending Resistance/Stiffness tester ») le « Teledyne Gurley» de la société GURLEY PRECISION INSTRUMENTS. Les mesures sont effectuées sur un fil de 4,6 cm de longueur positionné au deuxième trou de l'appareil en partant du bas, les réglages suivants sur l'appareil étant utilisés : length : 1", width : 2", weight position 4", weigth : 200. Ces fils raidisseurs **3**_{**1**} sont, par exemple, constitués d'une matière fibreuse et d'une matière thermoplastique. Ils correspondent en fait à des fils de renfort **3** ayant préalablement subis une étape d'habillage avec une matière thermoplastique. La matière thermoplastique représente, avantageusement, 5 à 60 % en poids du fil raidisseur. Dans certains cas, la matière thermoplastique utilisée peut avoir la caractéristique de se dissoudre dans la résine ultérieurement injectée comme, par exemple, le PVAC se dissout dans les résines polyester ou vinylester. Le fil à fonction initiale de raidisseur se transforme alors en fil de renfort au sein de la pièce composite finale et contribue ainsi après son imprégnation à la performance globale de la pièce.

Les fils raidisseurs **3**_{**1**} sont, par exemple, des filaments de renfort comélés avec des filaments thermoplastiques, des fils composés d'une âme fibreuse enrobée d'une matière thermoplastique, ou bien des fils composés d'une âme fibreuse recouverte au moins partiellement d'une poudre thermoplastique.

Les fils raidisseurs peuvent également se présenter sous la forme de fils de renfort préimprégnés ou poudrés avec une résine thermodurcie, du type époxy, phénolique ou polyester notamment, représentant de 1 à 60 % du poids du fil raidisseur.

Selon une autre variante, des fils raidisseurs métalliques, ou des fils synthétiques monobrins, pourront être utilisés.

Les fils raidisseurs sont répartis de façon espacée, au sein de la nappe **2** de fils de renfort **3**. Cette répartition est, de préférence, régulière et le pas d'espacement existant entre deux fils raidisseurs est, avantageusement, compris entre 5 et 50 cm. On pourra également choisir de disposer un fil raidisseur **3**_{**1**} tous les 10 à 50 fils de renfort **3**.

Selon une variante de l'invention, non représentée, il est également possible d'inclure, au sein de la première nappe **2**, des fils drainants, parallèles entre eux et aux fils de renfort **3**.

Ces fils drainants ont une fonction de diffuseur pour la résine ultérieurement injectée lors de la fabrication de pièces composites. Par fils drainants, on entend des fils de renfort munis d'un accessoire facilitant le drainage d'une résine injectée dans le complexe de renforcement selon l'invention. L'insertion des fils drainants est avantageuse car, dans le cas de complexes de renforcement présentant une couverture quasi totale, c'est-à-dire dans le cas de complexes non ajourés, des problèmes de disponibilité pour la résine injectée, lors de la fabrication de pièces moulées, peuvent se poser. Or, l'accessoire du fil drainant ménage un espace autour de ce dernier, espace qui servira de passage pour la résine lors de sa diffusion au sein du complexe de renforcement.

Différents types de fils drainants, permettant la formation de passages facilitant la circulation de la résine ultérieurement injectée au sein du complexe de renforcement **A**, peuvent être utilisés.

Selon un premier exemple de réalisation, les fils drainants se présentent sous la forme de renforts, avantageusement en fibres de verre, habillés de fibres de capillarité suffisante pour drainer la résine injectée. Les fibres, jouant le rôle d'accessoire du fil de renfort utilisé peuvent, par exemple, être des fibres hydrophiles de coton ou des fibres cellulosiques ou, encore, des fibres en polypropylène, polyester ou polyéthylène téréphtalate. Ces fibres ont un titre avantageusement compris entre 0,1 et 17 décitex. Le poids déposé de ces fibres autour du fil de renfort est, par exemple, compris entre 5 et 50 g pour 100 mètres linéaires. Le fil de renfort seul présente, par exemple, un titre de 1 200 tex et de 1 350 tex après habillage avec les fibres drainantes. Dans ce cas, les fils drainants utilisés peuvent être qualifiés de fils poilus.

Selon un second exemple de réalisation, les fils drainants se présentent sous la forme de fils guipés, c'est-à-dire de fils de renfort sur chacun desquels un monofilament vient s'enrouler. Le monofilament est, avantageusement, en polyamide, polyéthylène téréphtalate, polypropylène ou métal. Le diamètre de ce monofilament est, de préférence, compris entre 0,1 et 2 mm. Le poids déposé de ce monofilament autour du fil de renfort est, par exemple, compris entre 1 et 50 g pour 100 mètres linéaires. La torsion d'assemblage, quant à elle, est, avantageusement, comprise entre 20 et 200 tours par mètre linéaire.

Selon une autre variante, il peut être envisagé d'utiliser, en tant que fil drainant, deux fils de renfort, juxtaposés par poudrage avec une poudre thermoplastique ou thermodurcissable compatible avec la résine ultérieurement injectée. Ces deux fils sont de titrage très différent, le titre du plus petit pouvant tendre jusqu'à zéro. A titre d'exemple, un fil de renfort de 1 200 tex collé à un autre fil de renfort de 68 tex, grâce à une poudre thermoplastique, pourra jouer le rôle de réseau de fluage.

Tout comme les fils raidisseurs **3**_{**1**}, les fils drainants sont répartis de façon espacée, au sein de la nappe **2** de fils de renfort **3.** Cette répartition est, de préférence, régulière et le pas d'espacement, existant entre les deux fils drainants, est, avantageusement, compris entre 10 et 500 mm. On pourra également choisir de disposer un fil drainant **3**_{**1**} tous les dix à vingt fils de renfort **3.**

On choisira, de préférence, de disposer un fil drainant entre deux fils raidisseurs **3**_{**1**}. De façon avantageuse, les fils drainants seront espacés selon le même pas que les fils raidisseurs **3**_{**1**} mais décalés d'un demi-pas par rapport à ces derniers.

Tout comme les fils **3** et **3**_{**1**}, les fils drainants sont liés au sein du renfort **1** grâce aux fils de liage **5** qu'ils croisent sans entrelacement.

Selon un mode de réalisation préféré, représenté aux **fig. 4** et **5,** le produit **1** selon l'invention présente une deuxième nappe **6** de fils de renfort 7 parallèles entre eux et à ceux de la première nappe **2** disposés dans un second plan, les fils de liage **5** enrobés de la nappe transversale **4** étant emprisonnés entre les fils de renfort **3** de la première nappe 2 et les fils de renfort 7 de cette deuxième nappe **6**. Là encore, il est implicite que les fils de renfort 7 de la deuxième nappe **6** sont non-enrobés. Les fils de renfort **7** de cette deuxième nappe **6** sont également liés, au moins localement, aux fils de liage **5** enrobés, par fusion de la matière thermoplastique, la liaison ayant lieu à l'intersection des fils de renfort **7** de la deuxième nappe **6** avec les fils de liage **5** enrobés de la nappe transversale **4**. La quantité de matière thermoplastique doit donc être adaptée pour que la liaison de la première nappe **2** avec la nappe transversale **4** et la liaison de la troisième nappe **6** avec la nappe transversale 4 soient assurées.

Comme dit précédemment, la nappe **4** de fils de liage **5** est beaucoup moins dense que la ou les nappes de fils de renfort. Les fils de liage sont présents en quantité juste nécessaire pour assurer la liaison entre les fils de renfort. Aussi, de façon avantageuse, au moins 95 % en poids du complexe selon l'invention est constitué de fils de renfort **3** et éventuellement **7**.

Là encore, la deuxième nappe **6** de fils de renfort **7** comporte des fils raidisseurs **7**_{**1**} s'étendant parallèlement aux fils de renfort **7.** Les fils raidisseurs **7**_{**1**} présentent, de préférence, les mêmes caractéristiques et sont répartis comme les fils raidisseurs **3**_{**1**} au sein de la première nappe **2** de fils de renfort **3.** Cependant, de façon avantageuse, les fils raidisseurs **7**_{**1**} seront décalés d'un demi-pas par rapport aux fils raidisseurs **3**_{**1**}. De façon accessoire, la deuxième nappe **6** peut, également, contenir des fils drainants, parallèles aux fils de renfort **7,** tels que définis précédemment.

En termes de structure, les nappes **2** et **6** seront, de préférence, identiques.

Bien entendu, les fils raidisseurs **3**_{**1**} et **7**_{**1**} croisent les fils de liage **5,** sans entrelacement, comme c'est le cas des fils de renfort **3** et **7.**

Dans les dessins annexés, les nappes **2** et **6** de fils de renfort 3 et 7 sont représentées avec des fils de renfort monofilaments, pour plus de clarté. Bien entendu, dans la pratique, ces nappes sont constituées généralement de fils de renfort multifilaments s'étendant sous forme de faisceaux.

Les fils de renfort **3** et **7** sont de préférence jointifs dans chacune des nappes **2** et **6**. Il peut également être prévu, selon une variante non préférée mais qui ne doit pas pour autant être exclue, que les fils de renfort **3** et **7** soient disposés en mèches, les mèches de la première nappe **2** étant, de préférence, jointives avec les mèches de la deuxième nappe **6**. Préférentiellement, ces mèches s'étendent à espace constant et l'espace pour la nappe **2** est identique à l'espace pour la nappe **6**. La possibilité d'avoir des fils de renfort jointifs dans l'une des nappes **2** ou **6** et des fils de renfort disposés en mèches dans l'autre nappe n'est pas non plus à exclure. Dans tous les cas illustrés dans la présente invention, les fils de renfort répartis en une ou éventuellement deux nappes, forment un réseau unidirectionnel de renforcement assurant au complexe selon l'invention une couverture sensiblement égale à 100 %. A titre non limitatif, les fils de renfort **3** et **7** peuvent chacun indépendamment posséder un titre compris entre 20 et 1 000 tex pour des fils d'aramide, entre 68 et 9 600 tex pour des fils de verre ou de basalte et entre 68 et 6 000 tex pour des fils de carbone. Ces fils peuvent se présenter sous la forme de monobrins de section droite transversale circulaire ou analogue, de monobrins à caractère plat ou sous une forme multifilamentaire, étalée ou non, à la manière d'une mèche ou, encore, organisée pour que les filaments s'étendent parallèlement entre eux. De manière préférée, les fils de renfort sont multifilamentaires. Les fils de renfort peuvent être avec ou sans torsion. De façon avantageuse, les fils de renfort peuvent également, dans la première nappe **2** et/ou la deuxième nappe **6**, être voluminisés ou texturés et joueront alors une fonction supplémentaire de réserve pour la matière ou résine thermodure qui sera ultérieurement injectée.

Les fils raidisseurs **3**_{**1**} et **7**_{**1**} possèdent, de préférence, le même titre que les fils de renfort **3** et **7.** De façon avantageuse, les fils raidisseurs **3**_{**1**} et **7**_{**1**} ont un diamètre sensiblement identique à celui des fils de renfort **3** et **7.** Les fils raidisseurs **3**_{**1**} et **7**_{**1**} sont néanmoins plus raides que les fils de renfort **3** et **7.**

Les fils de liage **5** enrobés sont également, de manière générale, plus raides que les fils de renfort **3** et **7**, et présentent, par exemple, un titre compris entre 30 et 600 tex. Néanmoins, il peut être considéré que la fonction de renforcement du complexe selon l'invention est principalement assurée par les fils de renfort **3** de la première nappe et éventuellement les fils de renfort **7** de la seconde nappe quand celle-ci est présente. Les fils de liage **5** enrobés ont, quant à eux, pour unique fonction d'assurer la cohérence du complexe et sont tous orientés sensiblement dans la même direction.

Les fils de renfort **3** et **7**, ainsi que l'âme fibreuse des fils de liage **5** enrobés et éventuellement la matière fibreuse des fils raidisseurs **3**_{**1**} et **7**_{**1**} sont, par exemple, dans une matière choisie parmi les suivantes : verre, basalte, carbone, aramide, synthétiques Haute Performance (HP). La matière thermoplastique constitutive des fils de liage **5** enrobés et, éventuellement, des fils raidisseurs **3**_{**1**} et **7**_{**1**} est choisie parmi les suivantes : le polypropylène, le polyéthylène, la polyamide, le polyéthylène téréphtalate, le polyester, l'éthylènevinylacétate, le PVAC et leurs mélanges.

Les fils de renfort **3** sont, de préférence, de même nature et composition pour l'ensemble de la première nappe **2**. Il en est de même pour l'âme des fils de liage **5** enrobés de la nappe transversale **4,** pour les fils de renfort **7** de la deuxième nappe **6** et pour la matière fibreuse des fils raidisseurs **3**_{**1**} et **7**_{**1**}.

Le complexe selon l'invention est qualifié de plan, par opposition aux complexes de renforcement liés par couture qui présentent un état de surface irrégulier. Le complexe selon l'invention présente, quant à lui, une surface sensiblement plane.

La présente invention a également pour objet un procédé de fabrication d'un complexe de renforcement selon l'invention qui comprend les étapes suivantes :
■ constituer une première nappe non ajourée **2** de fils de renfort **3** parallèles entre eux dans laquelle des fils raidisseurs **3**_{**1**}, ou des fils précurseurs des fils raidisseurs **3**_{**1**}, parallèles entre eux et aux fils de renfort **3** sont répartis, superposer, sur cette première nappe, une nappe transversale **4** de fils de liage **5** espacés et composés d'une âme fibreuse enrobée d'une matière thermoplastique s'étendant transversalement aux fils de renfort **3** et aux fils raidisseurs **3**_{**1**} de la première nappe **2** en étant croisés sans entrelacement,
■ et lier lesdites nappes par chauffage entraînant la fusion au moins partielle de la matière thermoplastique des fils de liage **5,** compression et refroidissement.

Les fils de renfort et les fils raidisseurs, dits de chaîne, constituant la première nappe sont déposés et tendus dans le sens de production selon des techniques connues de l'homme de l'art mettant, par exemple, en oeuvre un couple de cylindre et rouleau. Les fils de trame de la nappe transversale de fils de liage sont, par exemple, déposés à l'aide d'un chariot trameur ou d'une machine turbine. Une nouvelle nappe de fils de chaîne peut alors être superposée à la nappe de fils de trame. Les différentes nappes sont ensuite passées dans une zone de chauffage avec action de calandrage, de manière à faire fondre l'enduction des fils de liage **5** et à réaliser la liaison entre les différentes nappes **2**, **4** et **6**. Une étape de refroidissement entraîne le durcissement des matières thermoplastiques et, éventuellement, des matières thermodurcies présentes, donnant sa tenue propre au complexe de renforcement 1 qui peut alors être manipulé et utilisé pour transformation.

A la première étape du procédé ci-dessus détaillé, les fils devant assurer la fonction de raidisseur peuvent être déposés, dans leur état final ou bien dans un état intermédiaire.

En effet, dans le cas où les fils raidisseurs présentant un gainage en résine thermoplastique ou en résine thermodurcie sont utilisés, il est possible de déposer :
■ soit des fils dont la matière thermoplastique ou thermodurcie est déjà dans un état polymérisé ou réticulé leur conférant la raideur voulue,
■ soit des fils encore souples, par exemple sous forme de fils de renfort poudrés avec une résine thermoplastique ou thermodurcissable, ou de fils de renfort comélés avec des fils de résine thermoplastique, la liaison entre les fils de renfort et la résine n'étant pas encore réalisée. Ces fils sont alors nommés des fils précurseurs de fils de renfort.

Dans ce cas, lors de l'étape de chauffage mise en oeuvre pour la réalisation du complexe de renforcement **1**, il se produit également, soit un raidissement/polymérisation de la résine dans le cas d'une résine thermoplastique, soit une réticulation dans le cas d'une résine thermodurcissable, accompagné de l'imprégnation du fil de renfort constitutif du fil raidisseur.

Dans le cas de raidisseurs à base de résine thermodurcissable, au préalable, il est envisageable de résiner ces fils raidisseurs avec le prépolymère thermodurcissable adéquat, puis de polymériser/réticuler la résine à l'état thermodurcie, soit par chauffage, soit par exposition U.V selon le choix des résines. Ces fils sont alors, et toujours en continu, associés aux fils de renforts, pour suivre, le même processus d'assemblage , fixation, enroulage.

L'étape finale de refroidissement permet le durcissement et la stabilisation de la résine conférant la raideur aux fils raidisseurs.

Des conditions opératoires convenables pour atteindre un tel résultat font, par exemple, intervenir une montée en température dans une enceinte de l'ordre de 160 à 230 °C selon les matériaux matrice utilisés, puis l'établissement d'une pression par calandrage comprise entre 0,5 à 5 bars avant d'imposer un refroidissement à température ambiante. Ainsi, le produit **1** selon l'invention peut être obtenu de manière simple et propre. Un tel produit 1 est également facilement stockable, manipulable et sa découpe est aisée. Le produit selon l'invention est parfaitement adapté pour servir d'armature de renfort pour des résines ou bitumes. Un tel produit se caractérise néanmoins par une faculté de déformation élastique, le rendant éventuellement enroulable.

Par ailleurs, la présence des fils raidisseurs au sein des nappes de fils de renfort permet de minimiser les risques d'écartement entre les fils de renfort, lors de l'injection de résine pendant la fabrication de pièces composites. On minimise, ainsi, la présence, dans la pièce, de zones de fragilisation constituées uniquement de résine sans renfort fibreux et on améliore l'homogénéité du matériau obtenu.

La **fig. 6** montre une autre variante de réalisation selon laquelle le complexe de renforcement **1** peut être associé sur au moins l'une de ses grandes faces **1a** ou **1b,** en surface des fils de renfort **3** de la première nappe **2** et/ou en surface des fils de renfort **7** de la deuxième nappe 6 à une couche **8** de poudre thermoplastique anti-effilochage, compatible avec les résines de transformation ultérieures. Cette couche **8** a pour fonction de renforcer la cohésion du complexe de renforcement, notamment lorsque les fils de chaîne de renfort sont nombreux et donc d'améliorer sa manutention. La couche **8** confère également, après polymérisation, une certaine raideur supplémentaire au complexe de renforcement **1** selon l'invention. La poudre anti-effilochage sera, par exemple, constituée ou à base de résine époxy ou polyéthylène téréphtalate. Une telle couche peut présenter un grammage de dépôt à l'unité de surface compris entre 2 et 50 g/m². Cette poudre anti-effilochage est déposée afin de recouvrir au moins partiellement les fils de renfort de la première nappe **2** et/ou de la deuxième nappe **6** et la liaison entre la couche **8** et la première nappe **2** de fils de renfort 3 et/ou la deuxième nappe **6** de fils de renfort **7**, peut être obtenue par la même opération que celle établissant la liaison entre la première nappe 2 et la nappe transversale **4**, d'une part, et la deuxième nappe **6** et la nappe transversale **4**, d'autre part.

De plus, la couche **8** permet par la suite de parer le complexe selon l'invention. En effet, comme le montre la **fig. 7,** cette couche **8** de poudre anti-effilochage est, par exemple, associée à un voile **9** d'aspect. Ce voile **9** peut être un non-tissé en matière synthétique comme le polyéthylène téréphtalate, l'acrylique ou en verre. Sa tenue sur le complexe **1** est assurée grâce à la poudre anti-effilochage.

Il pourrait également être prévu d'associer cette couche **8** de poudre thermoplastique à un mat de fibres coupées, par exemple de fibres de verre.

Le complexe de renforcement **1** selon l'invention peut être utilisé pour la fabrication d'engins de glisse, de skis ou de pales d'éolienne, ou d'éléments pultrudés.

L'invention ci-dessus n'est pas limitée aux exemples décrits et représentés, car diverses modifications peuvent y être apportées sans sortir de son cadre.

## Revendications

1. Complexe de renforcement (1) unidirectionnel, pour la réalisation de pièces composites à base de résine thermodurcissable ou thermoplastique injectée, dans lequel la fonction de renforcement est assurée par une série de fils de renfort **(3,7)** parallèles entre eux et organisés en une ou deux nappes **(2,6)** de façon à ce que le complexe de renforcement présente une couverture sensiblement de 100 %,
**caractérisé en ce que** :
■ des fils raidisseurs **(3**_{**1**}**, 7**_{**1**}**)** parallèles entre eux et aux fils de renfort **(3, 7)** sont répartis, de façon espacée, au sein de la ou des nappes **(2, 6)** de fils de renfort **(3, 7),**
■ et la liaison entre les fils **(3, 7, 3**_{**1**}**, 7**_{**1**}**)** constitutifs du complexe de renforcement **(1),** est assurée par une nappe ajourée transversale **(4)** de fils de liage **(5)** composés d'une âme fibreuse enrobée d'une matière thermoplastique et s'étendant transversalement aux fils de renfort **(3, 7)** et aux fils raidisseurs **(3**_{**1**}**, 7**_{**1**}**)** en étant croisés avec ces derniers sans entrelacement, lesdits fils de renfort **(3, 7)** et fils raidisseurs **(3**_{**1**}**, 7**_{**1**}**)** étant liés, à leur intersection avec les fils de liage **(5)** de la nappe transversale **(4)**, par la matière thermoplastique.

2. Complexe de renforcement **(1)** selon la revendication 1, **caractérisé en ce que** les fils raidisseurs **(3**_{**1**}**,7**_{**1**}**)** présentent une raideur comprise entre 1 et 5 mg, de préférence entre 2,5 et 4,5 mg.

3. Complexe de renforcement **(1)** selon la revendication 1 ou 2, **caractérisé en ce que** les fils raidisseurs **(3**_{**1**}**,7**_{**1**}**)** sont des fils associant une matière fibreuse et une matière thermoplastique, des fils préimprégnés ou poudrés avec une résine thermodurcie, des fils métalliques ou des fils synthétiques monobrins.

4. Complexe de renforcement **(1)** selon la revendication 3, **caractérisé en ce que** les fils raidisseurs **(3**_{**1**}**,7**_{**1**}**)** sont des fils associant une matière fibreuse et une matière thermoplastique choisis parmi des filaments de renfort comélés avec des filaments thermoplastiques, des fils composés d'une âme fibreuse enrobée d'une matière thermoplastique, ou bien des fils composés d'une âme fibreuse recouverte au moins partiellement d'une poudre thermoplastique.

5. Complexe de renforcement **(1)** selon la revendication 4, **caractérisé en ce que** la matière thermoplastique des fils raidisseurs se dissout dans la résine injectée lors de la réalisation ultérieure de pièces composites.

6. Complexe de renforcement **(1)** selon l'une des revendications 1 à 5,
**caractérisé en ce que** des fils drainant sont répartis, de façon espacée, au sein de la ou des nappes **(2,6)** de fils de renfort **(3, 7)** et s'étendent entre les fils raidisseurs **(3**_{**1**}**)** parallèlement à ces derniers.

7. Complexe de renforcement **(1)** selon l'une des revendications 1 à 6, **caractérisé en ce qu'**au moins 95 % en poids du complexe de renforcement **(1)** est constitué de fils de renfort **(3, 7)**.

8. Complexe de renforcement selon l'une des revendications 1 à 7, **caractérisé en ce que** les fils de liage **(5)** sont répartis par groupes espacés de deux, trois ou quatre fils.

9. Complexe de renforcement selon l'une des revendications 1 à 8, **caractérisé en ce que** les fils de liage **(5)** ou groupes de fils de liage **(5)** sont espacés les uns des autres d'un pas d'espacement compris entre 1 et 10 cm.

10. Complexe de renforcement **(1)** selon l'une des revendications 1 à 9, **caractérisé en ce que** les fils de liage **(5)** enrobés présentent un titre compris entre 30 et 600 tex.

11. Complexe de renforcement **(1)** selon l'une des revendications 1 à 10, **caractérisé en ce que** les fils de liage **(5)** enrobés présentent un enrobage de matière thermoplastique compris entre 10 et 500 g pour 1 000 mètres linéaires.

12. Complexe de renforcement **(1)** selon l'une des revendications 1 à 11, **caractérisé en ce que** les fils raidisseurs **(3**_{**1**}**, 7**_{**1**}**)** sont espacés les uns des autres au sein de la ou des nappes **(2, 6)** de fils de renfort **(3, 7),** selon un pas d'espacement compris entre 5 et 50 cm.

13. Complexe de renforcement **(1)** selon l'une des revendications 1 à 12, **caractérisé en ce que** les fils raidisseurs **(3**_{**1**}**, 7**_{**1**}**)** sont de même titre que les fils de renfort **(3, 7).**

14. Complexe de renforcement **(1)** selon l'une des revendications 1 à 13,
**caractérisé en ce que** les fils de renfort **(3)** sont répartis en une nappe **(2)** de fils jointifs.

15. Complexe de renforcement **(1)** selon l'une des revendications 1 à 13,
**caractérisé en ce que** les fils de renfort **(3, 7)** sont répartis en deux nappes **(2, 6)** de fils jointifs.

16. Complexe de renforcement **(1)** selon l'une des revendications 1 à 15,
**caractérisé en ce que** l'une des nappes **(2)** de fils de renfort **(3)** est recouverte au moins partiellement d'une poudre **(8)** thermoplastique anti-effilochage.

17. Complexe de renforcement **(1)** selon la revendication 16, **caractérisé en ce que** la poudre **(8)** thermoplastique anti-effilochage est recouverte par un voile **(9)** d'aspect, intimement lié au produit **(1)** par fusion au moins partielle de la poudre **(8)** anti-effilochage.

18. Complexe de renforcement **(1)** selon la revendication 16, **caractérisé en ce que** la poudre **(8)** anti-effilochage est associée à un mât de fibres de verre coupées.

19. Complexe de renforcement **(1)** selon l'une des revendications 1 à 18, **caractérisé en ce** la matière thermoplastique des fils de liage **(5)** et, éventuellement, des fils raidisseurs **(3**_{**1**}**,7**_{**1**}**)** est choisie parmi les suivantes : le polypropylène, le polyéthylène, la polyamide, la polyéthylène téréphtalate, le polyester, l'éthylène vinyl acétate ou leurs mélanges.

20. Complexe de renforcement **(1)** selon l'une des revendications 1 à 19, **caractérisé en ce que** les fils de renfort **(3** et **7)** ainsi que l'âme enrobée des fils de liage **(5)** et, éventuellement, la matière fibreuse des fils raidisseurs **(3**_{**1**}**, 7**_{**1**}**)** sont en une matière choisie parmi les suivantes : verre, basalte, carbone, aramide, synthétiques HP.

21. Procédé de fabrication d'un complexe de renforcement **(1)** selon la revendication 1, **caractérisé en ce qu'**il comprend les étapes suivantes :
■ constituer une première nappe non ajourée **(2)** de fils de renfort **(3)** parallèles entre eux dans laquelle des fils raidisseurs **(3**_{**1**}**)** ou des fils précurseurs des fils raidisseurs **(3**_{**1**}**)**, parallèles entre eux et aux fils de renfort **(3),** sont répartis, superposer, sur cette première nappe, une nappe transversale **(4)** de fils de liage **(5)** espacés et composés d'une âme fibreuse enrobée d'une matière thermoplastique s'étendant transversalement aux fils de renfort **(3)** et aux fils raidisseurs **(3**_{**1**}**)** de la première nappe **(2)** en étant croisés sans entrelacement,
■ et lier lesdites nappes par chauffage entraînant la fusion au moins partielle de la matière thermoplastique des fils de liage **(5),** compression et refroidissement.

22. Utilisation d'un complexe de renforcement **(1)** selon l'une des revendications 1 à 20, pour la fabrication de skis, de pales d'éoliennes, ou d'éléments pultrudés.
